# EUROPEAN PATENT SPECIFICATION

(11) **EP 3 557 291 B1**
(45) Date of publication and mention of the grant of the patent: **17.02.2021**
(21) Application number: 19170352.9
(22) Date of filing: 18.04.2019
(51) Int. Cl.: G02B 5/08, G02B 5/28, G01C 19/66, G02B 1/14

(54) **METHODS FOR ENHANCING THE DURABILITY AND MANUFACTURABILITY OF MULTILAYER INTERFERENCE MIRRORS**
VERFAHREN ZUR VERBESSERUNG DER HALTBARKEIT UND HERSTELLBARKEIT VON MEHRSCHICHTIGEN INTERFERENZSPIEGELN
PROCÉDÉS PERMETTANT D'AMÉLIORER LA DURABILITÉ ET L'APTITUDE À LA FABRICATION DE MIROIRS D'INTERFÉRENCE MULTICOUCHES

(30) Priority: 18.04.2018 US 201815956672
(43) Date of publication of application: 23.10.2019
(73) Proprietor: Honeywell International Inc., Morris Plains, NJ 07950 (US)
(72) Inventor: ALBERS, Steven C., Morris Plains, NJ 07950 (US); JOHNSON, Dean E., Morris Plains, NJ 07950 (US); RAMBERG, Randy, Morris Plains, NJ 07950 (US); VRIEZE, Lance, Morris Plains, NJ 07950 (US)
(74) Representative: Houghton, Mark Phillip

(56) References cited:
- EP-A1- 0 626 597
- EP-A1- 1 933 176
- US-A- 5 646 780
- US-A1- 2016 070 041

## Description

### BACKGROUND

Multilayer interference mirrors utilized as laser mirrors in Ring Laser Gyroscopes (RLGs) are continually exposed to high energy plasma operating environments that degrade the mirrors by reducing oxide in the refraction materials and thereby inducing photochromic losses. These mirrors are typically formed as stacks of alternating (e.g., 1/4 λ thickness) layers of relatively high and relatively low index of refraction materials.

In order to reduce the degrading effects of the high energy plasma operating environments, the high index of refraction materials are typically formed with metal oxides having a relatively high bonding energy to oxygen (e.g., Zirconium Oxide or ZrO₂). For example, ZrO₂ is often utilized as the top layer of the stacks in interference mirrors, because ZrO₂ exhibited a relatively high resistance to degradation in high energy plasma environments. Additionally, ZrO₂ is compatible with the relatively high temperatures to which the mirrors are exposed during the manufacturing processes of the RLGs involved. However, a problem with utilizing ZrO₂ as the top layer of the stack in an interference mirror is that ZrO₂ tends to form a micro-crystalline structure when deposited. These micro-crystalline structures may create scattering sites that can increase the photochromic losses in the interference mirrors involved and also reduce their operational lives.

Aluminum Oxide (AlO₃) is another material that is often utilized as the top layer of the stack in interference mirrors, because AlO₃ also has a relatively large heat of formation and exhibits a relatively high resistance to degradation in plasma environments. Also, the AlO₃ materials utilized exhibit superior ultra-violet (UV) energy blocking characteristics that function to protect the integrity of the underlying layers in the stacks of the interference mirrors involved. However, a significant manufacturing problem with utilizing AlO₃ as the outer/top layer in an interference mirror is that the AlO₃ material is etched relatively easily by the chemical cleaning and storage solutions commonly utilized during the manufacturing process, which degrades the outer surface of the interference mirror involved. Therefore, the need exists for a technique that can be utilized to protect the AlO₃ outer/top layer of the interference mirror during the manufacturing process, and thereby eliminate the surface degradation of the outer/top layer caused by the chemical cleaning and storage solutions utilized.

For the reasons stated above and for other reasons stated below which will become apparent to those skilled in the art upon reading and understanding the specification, there is a need in the art for methods for enhancing the manufacture of multilayer interference mirrors utilized, for example, in RLG devices.

US20160070041A1 discloses a dielectric mirror that, on the one hand exhibits a high destruction threshold when being irradiated with ultrashort high-power laser pulses, and on the other hand has a large bandwidth of group delay dispersion. The dielectric mirror includes a layer stack with a sequence of layers having different refractive indices, which act as a reflecting interference filter, wherein the layers are formed of at least three different materials exhibiting different destruction thresholds.

EP0626597A1 discloses a mirror for reflecting a selected frequency of light includes a plurality of alternating quarter wavelength thick layers of two dielectric materials that are resistive to physical and chemical changes upon exposure to ultraviolet radiation coated upon a substrate. The materials have different refractive indices. The materials preferably are comprised of a mixture of alumina and tantala as the high refractive index layer and alumina as the low refractive index layer.

EP1933176A1 discloses a laser mirror for a ring laser gyroscope (RLG) includes an intermediate optical coating, positioned within approximately a mid portion of the laser mirror for improving the performance of the RLG, and specifically for improving the reflectance of at least one wavelength emission. The properties of the intermediate optical coating and its placement within the laser mirror results in a good reflection of a first predetermined wavelength emission wavelength, for example a 633 nanometer wavelength emission, and a poor reflection of a second predetermined wavelengtli emission, for example a 650 nanometer wavelength emission. In one embodiment, the intermediate optical coating includes a half-wave or a multiple half-wave thickness and is made from Zirconium Oxide.

US5646780 discloses a mirror for a ring laser gyro including alternating optical quarterwave regions of SiO2 and ZrO2, and of admixtures of these. The alternating regions have thicknesses suitable for reflecting a laser beam in a ring laser gyro. A final coating of ZrO₂ and SiO2, and of admixtures of these, is constructed so as to be made substantially of ZrO₂ at a bottom portion and so as to have gradually increasing SiO2 content so that the top surface comprises substantially pure SiO2 material.

### SUMMARY

The present invention in its various aspects is as set out in the appended claims. Embodiments disclosed herein present techniques for enhancing the durability and manufacturability of multilayer interference mirrors utilized as laser mirrors in RLG devices.

### DRAWINGS

Embodiments of the present disclosure can be more easily understood and further advantages and uses thereof more readily apparent, when considered in view of the description of the preferred embodiments and the following figures in which:
FIG. 1 is a simplified structural diagram illustrating a multilayer mirror according to an embodiment of the present invention.
FIG. 2 is a simplified block diagram illustrating a ring laser gyroscope (RLG) comprising the multilayer mirror depicted in the embodiment illustrated in FIG. 1.
FIG. 3 is a flow diagram illustrating a method according to an embodiment of the present invention.

In accordance with common practice, the various described features are not drawn to scale but are drawn to emphasize features relevant to the present disclosure. Reference characters denote like elements throughout the figures and text.

### DETAILED DESCRIPTION

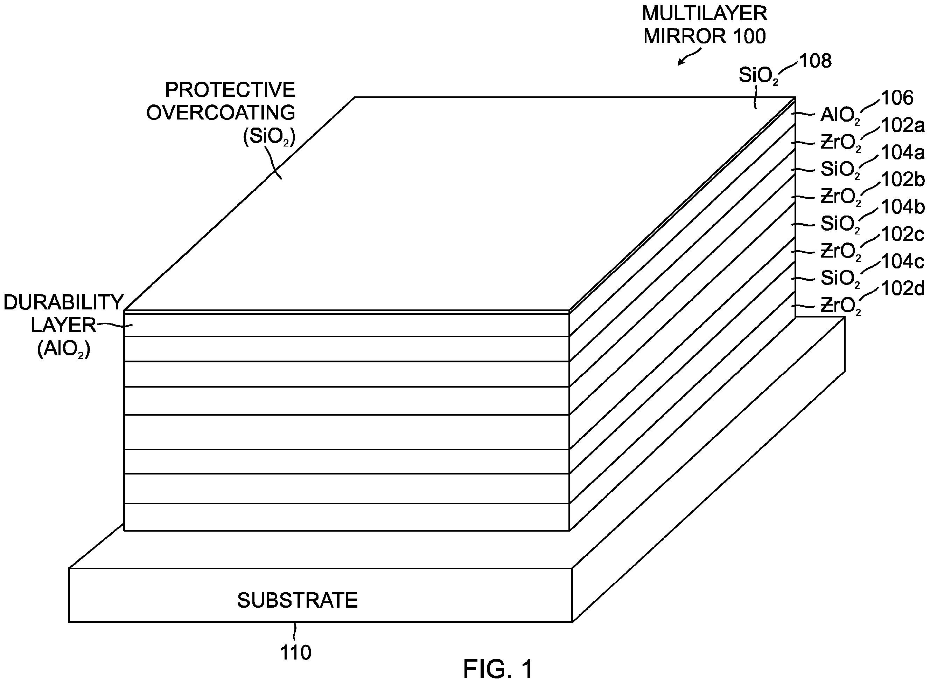

FIG. 1 is a simplified structural diagram illustrating an enhanced multilayer mirror 100, according to an embodiment of the present invention. For example, in one embodiment, the multilayer mirror 100 is an interference mirror for a ring laser gyroscope (RLG). The multilayer mirror 100 is a reflective mirror stack including an outer layer configured to provide enhanced operational durability, and an overcoat on the outer layer configured to inhibit degradation caused by existing manufacturing finishing techniques. Referring to the embodiment illustrated in FIG. 1, the multilayer mirror 100 includes a plurality of alternating (e.g., interleaved) ZrO₂ layers 102a-102d and SiO₂ layers 104a-104c. For example, in one embodiment, the ZrO₂ layers 102a-102d and SiO₂ layers 104a-104c are optical quarter-wave (e.g., nominally or substantially quarter-wave) structures that are formed utilizing a suitable deposition process (e.g., electron beam or ion beam deposition process). Notably, although a finite number of ZrO₂ and SiO₂ layers are shown for this embodiment, this particular number of layers is merely for illustrative purposes and several more alternating ZrO₂ and SiO₂ layers may be deposited in the multilayer mirror 100.

The enhanced multilayer mirror 100 also includes an outermost layer (e.g., durability layer) 106 deposited on the ZrO₂ layer 102a. The outermost layer 106 is an aluminum oxide material having a relatively high heat of formation (Aluminum Oxide or AlO₂/Al₂O₃). The AlO₂/Al₂O₃ material is selected for the outermost layer 106 primarily because the AlO₂/Al₂O3 material has superior UV energy blocking characteristics and can thereby protect the underlying ZrO₂ and SiO₂ layers in that regard. However, on the other hand, the AlO₂/Al₂O₃ material has manufacturing challenges because it can be etched and its surface degraded (e.g., referred to as etching degradation) by the cleaning and storage solutions utilized during the fabrication finishing process. Consequently, in order to mitigate these manufacturing process problems, an overcoat 108 of a silicon oxide material (e.g. SiO₂), which is a process-friendly material, which is impervious to the etching degradation caused by the cleaning and storage finishing solutions, is applied to the outer surface of the outermost layer 106. For example, a thin coating of (e.g., 10 angstroms in thickness) of a SiO₂ material can be applied (e.g., utilizing a suitable deposition process) as an overcoat to the outermost durability layer 106. In this embodiment, the multilayer mirror 100 including the stack of substantially quarter-wavelength layers and the process-friendly overcoat 108 is formed (e.g., by a suitable deposition process) on a substrate 110.

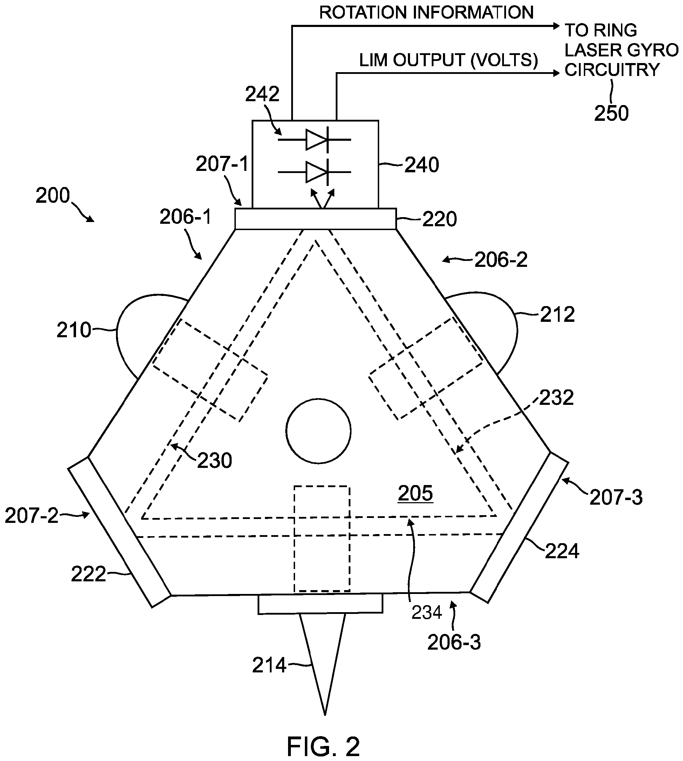

FIG. 2 is a simplified block diagram illustrating a ring laser gyroscope (RLG) 200, according to an embodiment of the present invention. Referring to the embodiment depicted in FIG. 2, the RLG 200 includes a laser block assembly 205, which in this embodiment, is triangular-shaped with three sides 206-1, 206-2 and 206-3. The laser block assembly 205 has three corners 207-1, 207-2 and 207-3. A first cathode 210 is disposed on side 206-1 of the laser block assembly 205, a second cathode 212 is disposed on side 206-2, and an anode 214 is disposed on side 206-3. The RLG 200 further includes multilayer mirrors 220, 222 and 224, which are disposed at the respective corners 207-1, 207-2 and 207-3 of the laser block assembly 205. A cavity 230, 232 and 234 is disposed within the laser block assembly 205 and parallel to the respective sides 206-1, 206-2 and 206-3. The cavity 230, 232, 234 is configured in conjunction with the multilayer mirrors 220, 222 and 224 to form a ring shaped laser beam path around the laser block assembly 205. The cavity 230 is filled with a suitable gas mixture of Helium and Neon. In one embodiment, the RLG 200 can include a readout assembly 240 with two photo diodes 242, which in operation, couples optical energy information from the cavity 230, 232, 234 and converts the optical energy to voltage signals from which rotation information can be obtained. The readout assembly 240 also outputs a voltage signal correlated with a laser intensity signal referred to as the Laser Intensity Monitor (LIM) signal. The LIM signal voltage provides information associated with the optical energy within the cavity 230. The output rotation information and LIM voltage are coupled to RLG circuitry 250, which processes the rotation information to facilitate the (e.g., inertial) navigation of a vehicle involved. Notably, in accordance with the present invention, the multilayer mirrors 220, 222 and 224 are implemented in accordance with the multilayer mirror 100 described above with respect to the embodiment illustrated in FIG. 1.

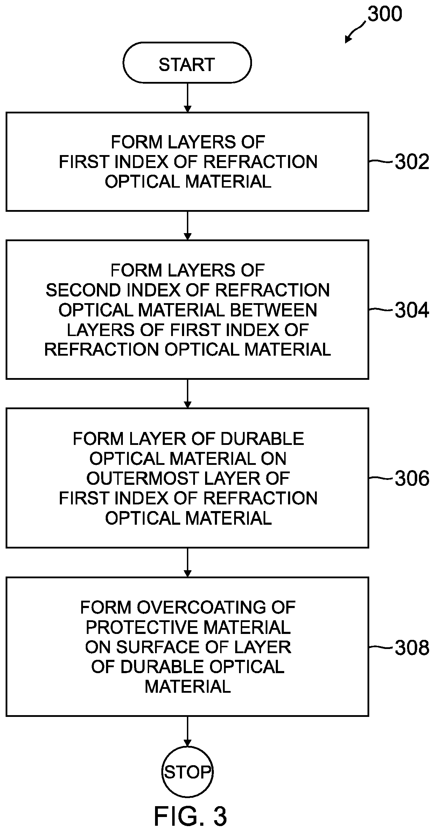

FIG. 3 is a flow diagram illustrating a method 300, in accordance with an embodiment of the present invention. Referring to the embodiments illustrated in FIGS. 1 and 3, the method begins by forming a first plurality of layers 102a-102d of a high index of refraction optical material, which is a zirconium oxide material, for example ZrO₂ (302), and also forming a second plurality of layers 104a-104c of a low index of refraction optical material, which is a silicon oxide material, for example SiO₂, between the layers 102a-102d (304). More precisely, as illustrated in FIG. 1, a first layer 102d of ZrO₂ is deposited (e.g., utilizing an electron beam or ion beam deposition process) on a substrate 110. A first layer 104c of SiO₂ is then deposited (e.g., also utilizing an electron beam or ion beam deposition process) on the exposed surface of the first layer 102d of ZrO₂. Next, a second layer 102c of ZrO₂ is deposited on the exposed surface of the first layer 104c of SiO₂, and then a second layer 104b of SiO₂ is deposited on the exposed surface of the second layer 102c of ZrO₂. Next, a third layer 102b of ZrO₂ is deposited on the exposed surface of the second layer 104b of SiO₂, and then a third layer 104a of SiO₂ is deposited on the exposed surface of the third layer 102b of ZrO₂. A fourth layer 102a of ZrO₂ is then deposited on the third layer 104a of SiO₂. Notably, although the embodiment illustrated in FIG. 1 depicts four layers 102a-102d of ZrO₂ and three layers 104a-104c of SiO₂, the present invention is not intended to impose an upper or lower limit to the number of layers that can be utilized in other embodiments. Also, although the embodiment illustrated in FIG. 1 depicts layers of ZrO₂ and SiO₂ for the layers 102a-102d and 104a-104c, the present disclosure is not intended to limit the high index of refraction and low index of refraction optical materials only to layers of ZrO₂ and SiO₂ that can be utilized in other embodiments.

Returning to the method 300, a layer 106 of a durable optical material, which is an aluminum oxide material (e.g., AlO₂ in this embodiment) is deposited (e.g., utilizing an electron beam or ion beam deposition process) on the exposed surface of the outermost layer 102a of the high index of refraction optical material ZrO₂ (306). This "durability layer" 106 has enhanced UV energy blocking characteristics and also provides physical protection for the underlying layers of ZrO₂ and SiO₂. An over-coating 108 of an additional protective material, which is a silicon oxide material (e.g., SiO₂) is then deposited (e.g., utilizing an electron beam or ion beam deposition process) on the exposed surface of the durability layer 106 (308). As such, this protective over-coating 108 protects the underlying layer 106 because the material utilized (e.g., SiO2) is impervious to the etching degradation that can occur to the durability layer 106 due to the cleaning and storage solutions utilized during the final fabrication process.

## Claims

1. A multilayer mirror (100), comprising:
a plurality of alternating layers of a high index of refraction optical material (102) and a low index of refraction optical material (104), wherein the high index of refraction optical material comprises a zirconium oxide material, and the low index of refraction optical material comprises a silicon oxide material;
a durability layer of an optical material (106) disposed on the plurality of alternating layers, wherein the durability layer comprises an aluminum oxide material; and **characterized by**:
an overcoat of a protective material (108) on an outermost surface of the durability layer, wherein the overcoat of the protective material comprises a coating of a silicon oxide material.

2. The multilayer mirror of claim 1, wherein the plurality of alternating layers are substantially quarter wavelength structures.

3. The multilayer mirror of claim 1, further comprising a substrate material (110) under the plurality of alternating layers.

4. The multilayer mirror of claim 1, wherein the multilayer mirror is a reflective mirror for a laser cavity in a ring laser gyroscope (RLG).

5. A method (300) of forming a multilayer mirror, comprising:
forming a plurality of layers of a high index of refraction optical material on a substrate (302), wherein the high index of refraction optical material comprises a zirconium oxide material;
forming a plurality of layers of a low index of refraction optical material between the layers of the high index of refraction optical material (304), wherein the low index of refraction optical material comprises a silicon oxide material;
forming a layer of a durable optical material on an outermost layer of the plurality of layers of the high index of refraction optical material (306), wherein the layer of the durable optical material comprises an aluminum oxide material; and **characterized by**:
forming an overcoat of a protective material on an outermost surface of the layer of the durable optical material (308), wherein the overcoat of the protective material comprises a coating of a silicon oxide material.

6. The method of claim 5, wherein the plurality of layers of the high index of refraction optical material are substantially quarter wavelength structures.

7. The method of claim 5, wherein the plurality of layers of the low index of refraction optical material are substantially quarter wavelength structures.

8. The method of claim 5, wherein the multilayer mirror is formed as a reflective mirror for a laser cavity in a ring laser gyroscope (RLG).

9. A ring laser gyroscope (200), comprising:
a laser block assembly (205);
a cavity (230, 232, 234) in the laser block assembly; and
wherein the cavity comprises a plurality of multilayer mirrors (220, 222, 224), wherein at least one multilayer mirror of the plurality of multilayer mirrors is the multilayer mirror according to claim 1.

## Patentansprüche

1. Mehrschichtiger Spiegel (100), der umfasst:
eine Vielzahl abwechselnder Schichten eines optischen Materials (102) mit hohem Brechungsindex und eines optischen Materials (104) mit niedrigem Brechungsindex, wobei das optische Material mit hohem Brechungsindex ein Zirkonoxidmaterial umfasst und das optische Material mit niedrigem Brechungsindex ein Siliziumoxidmaterial umfasst;
eine Haltbarkeitsschicht aus einem optischen Material (106), die auf einer Vielzahl abwechselnder Schichten angeordnet ist, wobei die Haltbarkeitsschicht ein Aluminiumoxidmaterial umfasst; und **gekennzeichnet durch**:
eine Deckschicht aus einem Schutzmaterial (108) auf einer äußersten Oberfläche der Haltbarkeitsschicht, wobei die Deckschicht des Schutzmaterials eine Beschichtung aus einem Siliziumoxidmaterial umfasst.

2. Mehrschichtiger Spiegel nach Anspruch 1, wobei die Vielzahl abwechselnder Schichten im Wesentlichen Viertelwellenlängenstrukturen sind.

3. Mehrschichtiger Spiegel nach Anspruch 1, der ferner ein Substratmaterial (110) unter der Vielzahl abwechselnder Schichten umfasst.

4. Mehrschichtiger Spiegel nach Anspruch 1, wobei der mehrschichtige Spiegel ein reflektierender Spiegel für einen Laserhohlraum in einem Ringlaserkreisel (RLG) ist.

5. Verfahren (300) zum Bilden eines mehrschichtigen Spiegels, das umfasst:
Bilden einer Vielzahl von Schichten aus einem optischen Material mit hohem Brechungsindex auf einem Substrat (302), wobei das optische Material mit hohem Brechungsindex ein Zirkonoxidmaterial umfasst;
Bilden einer Vielzahl von Schichten aus einem optischen Material mit niedrigem Brechungsindex zwischen den Schichten des optischen Materials (304) mit hohem Brechungsindex, wobei das optische Material mit niedrigem Brechungsindex ein Siliziumoxidmaterial umfasst;
Bilden einer Schicht aus einem haltbaren optischen Material auf einer äußersten Schicht der Vielzahl von Schichten des optischen Materials (306) mit hohem Brechungsindex, wobei die Schicht aus dem haltbaren optischen Material ein Aluminiumoxidmaterial umfasst; und **gekennzeichnet durch**:
Bilden einer Deckschicht aus einem Schutzmaterial auf einer äußersten Oberfläche der Schicht des haltbaren optischen Materials (308), wobei die Deckschicht aus dem Schutzmaterial eine Beschichtung aus einem Siliziumoxidmaterial umfasst.

6. Verfahren nach Anspruch 5, wobei die Vielzahl von Schichten des optischen Materials mit hohem Brechungsindex im Wesentlichen Viertelwellenlängenstrukturen sind.

7. Verfahren nach Anspruch 5, wobei die Vielzahl von Schichten des optischen Materials mit niedrigem Brechungsindex im Wesentlichen Viertelwellenlängenstrukturen sind.

8. Verfahren nach Anspruch 5, wobei der mehrschichtige Spiegel als ein reflektierender Spiegel für einen Laserhohlraum in einem Ringlaserkreisel (RLG) gebildet ist.

9. Ringlaserkreisel (200), der umfasst:
eine Laserblockbaugruppe (205);
einen Hohlraum (230, 232, 234) in der Laserblockbaugruppe; und
wobei der Hohlraum eine Vielzahl mehrschichtiger Spiegel (220, 222, 224) umfasst, wobei mindestens ein mehrschichtiger Spiegel der Vielzahl mehrschichtiger Spiegel der mehrschichtige Spiegel nach Anspruch 1 ist.

## Revendications

1. Miroir multicouche (100), comprenant :
une pluralité de couches alternées d'un matériau optique à indice de réfraction élevé (102) et d'un matériau optique à faible indice de réfraction (104), le matériau optique à indice de réfraction élevé comprenant un matériau à base d'oxyde de zirconium et le matériau optique à faible indice de réfraction comprenant un matériau à base d'oxyde de silicium ;
une couche de durabilité d'un matériau optique (106), disposée sur la pluralité de couches alternées, la couche de durabilité comprenant un matériau à base d'oxyde d'aluminium ; et **caractérisée par** :
une surcouche d'un matériau protecteur (108) sur une surface la plus externe de la couche de durabilité, la surcouche du matériau protecteur comprenant un revêtement d'un matériau à base d'oxyde de silicium.

2. Miroir multicouche selon la revendication 1, dans lequel la pluralité de couches alternées sont des structures sensiblement quart d'onde.

3. Miroir multicouche selon la revendication 1, comprenant en outre un matériau de substrat (110) sous la pluralité de couches alternées.

4. Miroir multicouche selon la revendication 1, dans lequel le miroir multicouche est un miroir réfléchissant pour une cavité laser dans un gyrolaser annulaire (RLG).

5. Procédé (300) de formation d'un miroir multicouche, comprenant :
la formation d'une pluralité de couches d'un matériau optique à indice de réfraction élevé sur un substrat (302), le matériau optique à indice de réfraction élevé comprenant un matériau à base d'oxyde de zirconium ;
la formation d'une pluralité de couches d'un matériau optique à faible indice de réfraction entre les couches du matériau optique à indice de réfraction élevé (304), le matériau optique à faible indice de réfraction comprenant un matériau à base d'oxyde de silicium ;
la formation d'une couche d'un matériau optique durable sur une couche la plus externe de la pluralité de couches du matériau optique à indice de réfraction élevé (306), la couche du matériau optique durable comprenant un matériau à base d'oxyde d'aluminium ; et **caractérisé par** :
la formation d'une surcouche d'un matériau protecteur sur une surface la plus externe de la couche du matériau optique durable (308), la surcouche du matériau protecteur comprenant un revêtement d'un matériau à base d'oxyde de silicium.

6. Procédé selon la revendication 5, dans lequel la pluralité de couches du matériau optique à indice de réfraction élevé sont des structures sensiblement quart d'onde.

7. Procédé selon la revendication 5, dans lequel la pluralité de couches du matériau optique à faible indice de réfraction sont des structures sensiblement quart d'onde.

8. Procédé selon la revendication 5, dans lequel le miroir multicouche est formé sous forme de miroir réfléchissant pour une cavité laser dans un gyrolaser annulaire (RLG).

9. Gyrolaser annulaire (200), comprenant :
un ensemble de bloc laser (205) ;
une cavité (230, 232, 234) dans l'ensemble de bloc laser ; et
la cavité comprenant une pluralité de miroirs multicouches (220, 222, 224), dont au moins un miroir multicouche est le miroir multicouche selon la revendication 1.
